# EUROPEAN PATENT APPLICATION

(11) **EP 3 636 737 A1**
(43) Date of publication of application: **15.04.2020**
(21) Application number: 18199249.6
(22) Date of filing: 09.10.2018
(51) Int. Cl.: C12C 11/11, B67D 1/00, C12C 5/00

(54) **A METHOD OF PRODUCING BEER OR A BEER-LIKE BEVERAGE AND A BEER CONCENTRATE**

(71) Applicant: Brewconcentrate BV, 1031 HX Amsterdam (NL)
(72) Inventor: Lunter, Marcel, 1031 HX Amsterdam (NL); Buijze, Tjeerd Gijsbrecht Sidney, 1031 HX Amsterdam (NL)
(74) Representative: De Vries & Metman

(57) **Abstract**

A method of producing beer comprises the steps of producing or supplying a beer intermediate, storing the beer intermediate in a container, transporting the container containing the beer intermediate to a processing station where the beer intermediate is discharged from the container for further processing and mixing CO₂ with the discharged beer intermediate. Before the step of storing the beer intermediate at least one of alcohol, malt syrup, wheat syrup, hop and sugar is added to the beer intermediate such that the stored beer intermediate forms a beer concentrate. Water is mixed with the discharged beer concentrate so as to obtain ready-to-consume beer or a ready-to-consume beer-like beverage.

## Description

The present invention relates to a method of producing beer or a beer-like beverage, comprising the steps of producing or supplying a beer intermediate, storing the beer intermediate in a container, transporting the container containing the beer intermediate to a processing station where the beer intermediate is discharged from the container for further processing and mixing CO₂ with the discharged beer intermediate.

Such a method is known from DE 10 2005 062 157, which discloses that the beer intermediate can be stored in a non-pressure container because of its low CO₂ concentration. The known method allows carbon dioxide arising naturally in the course of the fermenting process of beer to escape, for example by applying no counter-pressure in the course of the post-fermentation process of beer; besides, carbon dioxide is removed by a degassing or de-carbonation facility in order to add it back later. Further examples of de-carbonation processes are membrane filtration, heating, mechanical motion, freeze drying, expulsion, in particular with N₂ or air, and generation of a vacuum, in particular by means of a vacuum pump or Venturi tube. Due to the low carbon dioxide content the beer intermediate can be stored in a non-pressure container, for example a bag-in-box container, which makes shipping much easier than in case of pressurized containers.

An object of the invention is to minimize logistical costs.

This object is achieved by the method according to the invention which is characterized in that before the step of storing the beer intermediate at least one of alcohol, malt syrup, wheat syrup, hop and sugar is added to the beer intermediate such that the stored beer intermediate forms a beer concentrate, and wherein water is mixed with the discharged beer concentrate so as to obtain ready-to-consume beer or a ready-to-consume beer-like beverage.

An advantage of the method according to the invention is that the beer concentrate can be transported in containers whereas water can be mixed with the beer concentrate later on, hence minimizing logistic costs. Experiments have revealed that the resulting ready-to-consume beer or ready-to-consume beer-like beverage cannot be distinguished from conventional beer. Furthermore, no filtering appears to be required after adding CO₂ and/or water or just before storing.

Water may be mixed with the discharged beer concentrate at a ratio between 1:3 and 1:25. The selected mixing ratio determines the amounts of the added substances to the beer intermediate.

The beer concentrate is manufactured by adding concentrates of certain substances such as alcohol, malt syrup, wheat syrup, hop and sugar rather than removing water from the intermediate beer after a brewing process in order to obtain a concentrate. This is advantageous since processes to remove water generally also remove other substances such as flavouring substances, leading to a deteriorated quality of the end product. It is noted that due to adding at least one of the mentioned substances the beer concentrate may be relatively viscous.

Malt syrup can be made of barley and/or wheat, for example. Hop can be supplied in the form of a liquid of hop extract, hop granulates or the like. The mentioned substances are freely available on the market.

The produced or supplied beer intermediate may have a CO₂ concentration which is lower than 3 g/kg, preferably lower than 2 g/kg, more preferably lower than 1 g/kg. This means that before adding one of the mentioned substances the CO₂ concentration is already low, resulting in a still lower concentration in the beer concentrate. It is also conceivable to supply a beer intermediate having a relatively high CO₂ concentration, wherein the beer concentrate is decarbonized before storing it in a container. It is advantageous to store a low-CO₂ concentrate in the container since it provides the opportunity to apply light-weight non-pressure containers.

The beer intermediate can be manufactured through a traditional brewing process. As described above, CO₂ can be removed by a degassing or de-carbonation facility. Additionally, due to adding substances to the beer intermediate in order to obtain the beer concentrate, the concentration of CO₂ is automatically reduced. Furthermore, adding alcohol also leads to escape of CO₂.

Alternatively, the beer intermediate can be manufactured synthetically by mixing certain beer components.

In an advantageous embodiment CO₂ and water are mixed with the beer concentrate at the same time by mixing carbonated water with the beer concentrate, since the discharged beer concentrate can be supplied to a so-called post-mix dispenser, such as used for dispensing several kinds of beverages. The processing station may comprise a tapping cock. The amount of added substance can be selected such that the discharged beer concentrate can be used in an existing post-mix dispenser. The discharged beer concentrate can also be supplied to a post-mix dispenser which is adapted for a certain beer concentrate, for example a beer concentrate which requires a water and CO₂ mixing ratio which lies outside the range of existing post-mix dispensers.

The beer intermediate may contain alcohol such that after adding CO₂ and water to the beer concentrate the end product forms an alcoholic beer or beer-like beverage. For example, the alcohol concentration in the beer intermediate before the step of adding one of alcohol, malt syrup, wheat syrup, hop and sugar may lie between 0 and 16%.

Alternatively, before the step of mixing one of alcohol, malt syrup, wheat syrup, hop and sugar the beer intermediate contains no alcohol or an alcohol amount lower than 5 vol%. The resulting end product may be a low-alcoholic or non-alcoholic beer or beer-like beverage, depending on the amount of water that is mixed with the beer concentrate, but it is also possible to mix alcohol with the discharged beer concentrate in order to obtain an alcoholic beer or beer-like beverage.

The sugar may comprise glucose, preferably between 25 and 100%.

The invention is also related to a beer concentrate which is manufactured by producing or supplying a beer intermediate having a CO₂ concentration which is lower than 3 g/kg, preferably lower than 2 g/kg, more preferably lower than 1 g/kg, and adding at least one of alcohol, malt syrup, wheat syrup, hop and sugar to the beer intermediate so as to form the beer concentrate.

The beer concentrate can be used in the method as described hereinbefore.

It is also possible to consume the beer concentrate after adding CO₂ only, hence without mixing the beer concentrate with water.

The invention will hereafter be elucidated with embodiments of the invention by way of example.

In a first embodiment a beer is brewed in a traditional manner. Carbon dioxide that arises during the brewing process will escape by applying no counter-pressure in the course of the post-fermentation process of beer. Subsequently, carbon dioxide is removed by a degassing facility, resulting in a beer intermediate which has a CO₂ concentration which is lower than 1 g/kg. Then, alcohol, malt syrup, wheat syrup, hop and sugar, flavouring substances, preservatives and foam inhibitors are added. The amounts of these additives depend on the mixing ratio with water which is added later on and the desired taste. The amount of added water may be more or less fixed when using a post-mix dispenser to mix the beer concentrate with carbonated water. For example, the mixing ratio may be 1:3 to 1:25.

The beer concentrate is stored in a bag-in-box and transported to a processing station in the form of a post-mix dispenser. At the post-mix dispenser the beer concentrate is discharged from the bag-in-box to a mixing unit where the beer concentrate is mixed with carbonated water. After mixing the resulting ready-to-consume beer or beer-like beverage flows to a tapping cock where it is introduced into a glass.

In another embodiment a beer concentrate is produced as described above, but it is then stored in a small cup, comparable to a coffee cup for a coffee machine. The cup is transported to a consumer who opens the cup and pours the beer concentrate into a bottle of carbonated water, such as traditional sparkling water. Subsequently, ready-to-consume beer or beer-like beverage can be served from the bottle.

In still another embodiment the above-mentioned cup is transported to a consumer who puts the cup in a machine where the cup is opened and the beer concentrate is poured into a glass together with carbonated water.

The applicant has shown that a ready-to-consume beer or beer-like beverage can be produced by adding the following substances to a de-carbonated beer intermediate: 0-800 g sugar, 0-40 g hop extract and 0-800 g malt syrup per 1 beer intermediate. The resulting beer concentrate is mixed with water by the following ratios: 1 l beer concentrate and 3 l water to 1 l beer concentrate and 24 l water.

It is noted that numerous additives can be added to the beer concentrate before storing it, such as preservatives, emulsifiers, flavouring substances, foam inhibitors and the like.

The intermediate beer may have an alcohol concentration varying from 0 to 16 vol% before adding the above-mentioned substances so as to produce the beer concentrate. For example, when starting with an alcohol concentration of about 9 vol%, the beer concentrate may have an alcohol concentration of 0.5-5%, depending on the mixing ratio with water which is added later on. The alcohol concentration of the resulting beverage will be lower than 5 vol% in this case. It is also possible to start with a relatively high alcohol concentration of about 16 vol%, for example, and adding alcohol to form the beer concentrate such that the beer concentrate has an alcohol concentration of 40%. After mixing the beer concentrate with carbonated water the resulting beverage may have an alcohol concentration of 6%, for example.

In order to increase the alcohol concentration of the beer concentrate it is also possible to brew a beer intermediate in a traditional manner, which has an alcohol percentage of 8 vol%, for example, and adding an alcoholic sugar water that is produced in a known manner from a mixture of sugar water and a high alcohol tolerant yeast. Such a yeast can ferment up to a relatively high alcohol percentage of 20%, for example. The mixing ratio of the beer intermediate and the alcoholic sugar water may be such that the resulting liquid has an alcohol concentration of 15%, for example. In a next step alcohol can be added to this mixture in order to form the beer concentrate, which may have an alcohol percentage of 22%, for example.

The invention is not limited to the embodiments as described hereinbefore, which may be varied in different manners within the scope of the claims and their technical equivalents.

## Claims

1. A method of producing beer or a beer-like beverage, comprising the steps of:
producing or supplying a beer intermediate,
storing the beer intermediate in a container,
transporting the container containing the beer intermediate to a processing station where the beer intermediate is discharged from the container for further processing,
mixing CO₂ with the discharged beer intermediate, **characterized in that** before the step of storing the beer intermediate at least one of alcohol, malt syrup, wheat syrup, hop and sugar is added to the beer intermediate such that the stored beer intermediate forms a beer concentrate, and wherein water is mixed with the discharged beer concentrate so as to obtain ready-to-consume beer or a ready-to-consume beer-like beverage.

2. A method according to claim 1, wherein the produced or supplied beer intermediate has a CO₂ concentration which is lower than 3 g/kg, preferably lower than 2 g/kg, more preferably lower than 1 g/kg.

3. A method according to claim 1 or 2, wherein CO₂ and water are mixed with the beer concentrate at the same time by mixing carbonated water with the beer concentrate.

4. A method according to any one of the preceding claims, wherein the beer intermediate contains alcohol.

5. A method according to one of the claims 1-3, wherein before the step of mixing one of alcohol, malt syrup, wheat syrup, hop and sugar the beer intermediate contains no alcohol or an alcohol amount lower than 5 vol%.

6. A method according to claim 5, wherein alcohol is mixed with the discharged beer concentrate.

7. A method according to any one of the preceding claims, wherein the sugar comprises glucose, preferably between 25 and 100%.

8. A method according to any one of the preceding claims, wherein the processing station comprises a tapping cock, where CO₂ and water are mixed with the discharged beer concentrate.

9. A method according to any one of the preceding claims, wherein the water is mixed with the discharged beer concentrate at a ratio between 1:3 and 1:25.

10. A beer concentrate which is manufactured by producing or supplying a beer intermediate having a CO₂ concentration which is lower than 3 g/kg, preferably lower than 2 g/kg, more preferably lower than 1 g/kg, and adding at least one of alcohol, malt syrup, wheat syrup, hop and sugar to the beer intermediate so as to form the beer concentrate.
